# EUROPEAN PATENT SPECIFICATION

(11) **EP 4 413 304 B1**
(45) Date of publication and mention of the grant of the patent: **23.07.2025**
(21) Application number: 22879023.4
(22) Date of filing: 07.10.2022
(51) Int. Cl.: F24F 13/02, F16L 59/14, F16L 59/08, B32B 1/08, B32B 5/02, B32B 15/085, B32B 15/14, B32B 15/20, B32B 27/12, B32B 27/32, B32B 15/18

(54) **A VENTILATION DUCT AND METHOD OF PRODUCING A VENTILATION DUCT RESISTING HIGH TEMPERATURES**
LÜFTUNGSKANAL UND VERFAHREN ZUR HERSTELLUNG EINES LÜFTUNGSKANALS MIT HOHER TEMPERATURBESTÄNDIGKEIT
CONDUIT DE VENTILATION ET PROCÉDÉ DE PRODUCTION D'UN CONDUIT DE VENTILATION RÉSISTANT AUX TEMPÉRATURES ÉLEVÉES

(30) Priority: 08.10.2021 SE 2151233
(43) Date of publication of application: 14.08.2024
(73) Proprietor: Climate Recovery Ind AB, 392 39 Kalmar (SE)
(72) Inventor: WALLIN, Peter, 394 77 KALMAR (SE); WALLIN, Andreas, 394 74 KALMAR (SE); BERNHARDSSON, Göran, 269 95 BÅSTAD (SE)
(74) Representative: Noréns Patentbyrå AB
(86) International application number: PCT/SE2022/050906
(87) International publication number: WO 2023/059261

(56) References cited:
- DE-A1- 2 500 691
- GB-A- 2 586 454
- GB-A- 916 591
- JP-A- 2018 112 329
- JP-A- 2020 190 340
- US-A- 3 187 778
- US-A- 3 434 502
- US-A- 3 558 391
- US-A- 5 816 043

## Description

The present invention concerns elongated ventilation ducts capable of resisting high temperatures for a long period of time.

There are classifications for the possibility of withstanding high temperatures for ducts. The ducts transfers flue gas and must withstand temperatures between 900 and 1000 degrees Celsius for at least half an hour or at least an hour to fulfil a European classification EN1366 according to EI30/60. This will give people time to evacuate a burning building. According to this classification the cross section must be intact, and the outside temperature of the duct must not exceed 140 degrees Celsius in average and not over 180 degrees Celsius in one point.

At the moment steel ducts are arranged in buildings, which thereafter are provided with mineral wool to insulate the ducts. The mineral wool is usually attached by means of chicken wire around the ducts and mineral wool. Such ventilation duct is for example disclosed in US3187778A.

The aim of the present invention is to provide an easily handled, lightweight ventilation duct fulfilling at least the classification EN1366 according to EI30/60.

### Summary of the invention

The invention is defined in the appended independent claims. Advantageous embodiments of the invention are defined in the dependent claims.

According to a first aspect of the invention the aim can be met by means of an elongated ventilation duct comprising a fibre layer without any splices and an inner layer surrounding an elongated flow space. The fibre layer comprises mineral fibres and a binder, compressed into a desired duct shape and the inner layer is a stainless-steel foil having a thickness of 0,01-0,3 mm, facing the flow space. The mineral fibres should have a melting point over 800 degrees Celsius.

By means of the present invention a low weight and fire resisting elongated ventilation duct is provided in one piece. This means that the elongated ventilation duct is ready for transport to a building site and to be arranged in the building. There will not be necessary for other transports of insulating material and chicken wire. Neither the extra workload to attach the insulating material at the ducts when they are arranged in the building is needed. Thus, it is faster and easier to arrange the ducts according to the invention. Additionally, the ventilation duct of the invention is sound dampening, which means that any vibrations in the duct will not transfer to adjacent building structures due to its semisoft formation. Due to its semisoft formation, it is also a bit flexible so that it can squeeze through tight passages. The duct also comprises a minimum of heat-conducting material and a minimum of energy. The stainless-steel foil helps the duct to withstand high temperatures and protects from corroding.

According to some embodiments an outer layer is provided on the outside of the fibre layer. The outer layer comprises an aluminium foil and a polyethene layer for attachment to the fibre layer. This make the ducts easier and safer to handle since the fibres are encapsuled inside the outer layer.

According to some embodiments the fibre layer is self-supported.

According to some embodiments the mineral fibre length is at least 10 mm, preferably at least 20 mm or at least 30 mm. Due to the long fibres the compressed fibre layer will stay intact also after the binder is burnt out.

According to some embodiments the binder is phenolic based and water soluble.

According to some embodiments the amount of binder in the fibre layer is 1-5% by weight before the compression.

According to some embodiments the elongated ventilation duct lacks binding material between the fibre layer and the inner layer. This keeps the energy level low in the ventilation duct, which keeps the temperature down in the duct.

According to some embodiments the outer layer is black. Thus, heat will dissipate easily.

According to some embodiments the amount of polyethene is between 10-50 g/m², preferably 15-30 g/m².

According to some embodiments the cross-sectional shape is more or less circular.

According to some embodiments stiffening means are present at the inner layer, to provide support for the inner layer to withstand under pressure.

According to a second aspect of the invention a method of manufacturing a ventilation duct having a mineral fibre layer without any splices and an inner layer of stainless-steel foil is provided. A binder solution is sprayed on the fibre layer, whereafter the fibre layer is compressed into a duct shape, having an elongated flow space, under heated conditions so that water in the binder solution evaporates. Thereafter the inner layer is brought into the flow space of the duct, which inner layer seals the flow space of the duct from the fibre layer.

According to some embodiments an outer layer, comprising an aluminium foil and a polyethene layer, is provided on the outside of the fibre layer and heated so that the polyethene foil melts and thus bonds the outer layer to the fibre layer.

According to some embodiments the inner layer has a thickness of 0,01-0,3 mm.

According to some embodiments the inner layer is made up of two elongated sheets of stainless-steel foil, which are united along each long side and raised into a corresponding shape as the flow space of the duct. Preferably, the stainless-steel foils are united by means welding, riveting, or folding.

According to some embodiments the inner layer is drawn more or less linearly along a thought length axis into the flow space of the duct.

According to some embodiments stiffening means are provided at the inner layer.

### Short description of the drawings

The present invention will be described in more detail under referral to the drawings, in which
Fig. 1 shows an elongated duct according to an embodiment of the invention in a perspective view.
Fig. 2 shows a cross-sectional view of another embodiment.
Fig. 3 shows a close-up section view showing ingoing layers of an embodiment in more detail.
Fig. 4 shows an inner layer of an embodiment during manufacture in a perspective view.
Fig. 5 shows an embodiment of stiffening means arranged inside a duct in cut-away view.
Fig. 6 shows another embodiment of stiffening means arranged inside a duct in cut-away view.

### Detailed description of embodiments of the invention

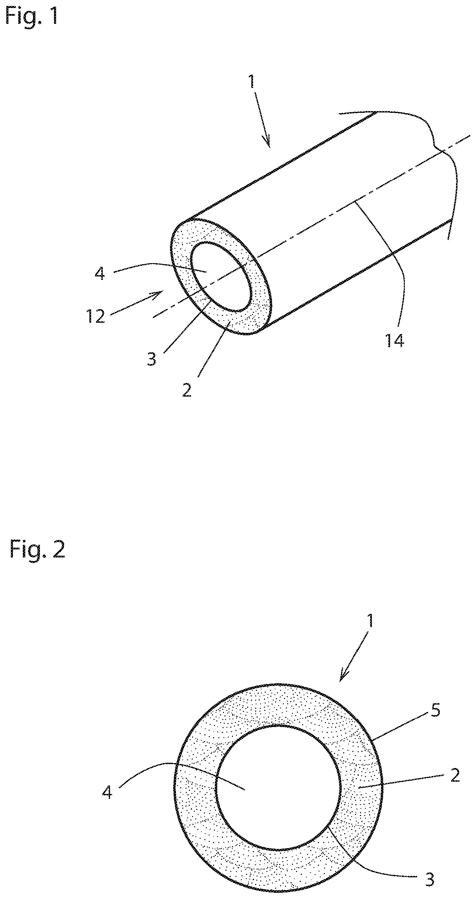

In Fig. 1 an embodiment of an elongated ventilation duct 1 comprising a fibre layer 2 and an inner layer 3 surrounding an elongated flow space 4 is shown in perspective. As is evident from the figures, especially Figs. 1 and 2, and the description below, the fibre layer is without any splices. The cross-sectional shape may be any suitable shape. In the shown embodiment the elongated ventilation duct 1 has a circular shape. A thought length axis 14 is going through the flow space 4 along the length of the elongated ventilation duct 1 and it has two open ends 12.

The fibre layer 2 is built up by mineral fibres being compressed with a binder. The mineral fibres should have a melting point over 800 degrees Celsius. The fibres may have a length of at least 10 mm, preferably at least 20 mm or at least or 30 mm. In one embodiment the fibre fulfils the classification RAL/40.

The mineral fibres are sprayed with a binder solution, which preferably is based on a watersoluble phenolic resin. Thereafter the mineral fibres are compressed and heated in a form to reach its final shape. During the compression and heating the water in the binder solution evaporates and the phenolic resin cures at a temperature around 200 degrees Celsius. The amount of binder solution before the forming procedure, i.e., the compression and heating, is between 1-5% by weight. The amount of binder is kept to a minimum in order to avoid adding too much energy into the ventilation duct, which energy would increase the temperature in case of fire. It is also conceivable to use other binders than phenolic based.

After the compression and heating step of the fibre layer, the fibre layer is stiff enough to be self-supported so the elongated ventilation is self-supported.

The inner layer is a stainless-steel foil having a thickness of 0,01-0,3 mm, preferably 0,01-0,2 mm and most preferred 0,03-0,1. As an example, AISI 304 may be a suitable steel.

In Fig. 2 another embodiment is shown in a cross-sectional view. According to this embodiment the elongated ventilation duct 1 comprises a fibre layer 2, an inner layer 3 and an outer layer 5. The outer layer 5 comprises at least an aluminium foil and a layer of polyethene. The amount of aluminium may be 15-25 gram/m². The amount of polyethene may be 10-50 g/m², preferably 15-30 g/m².

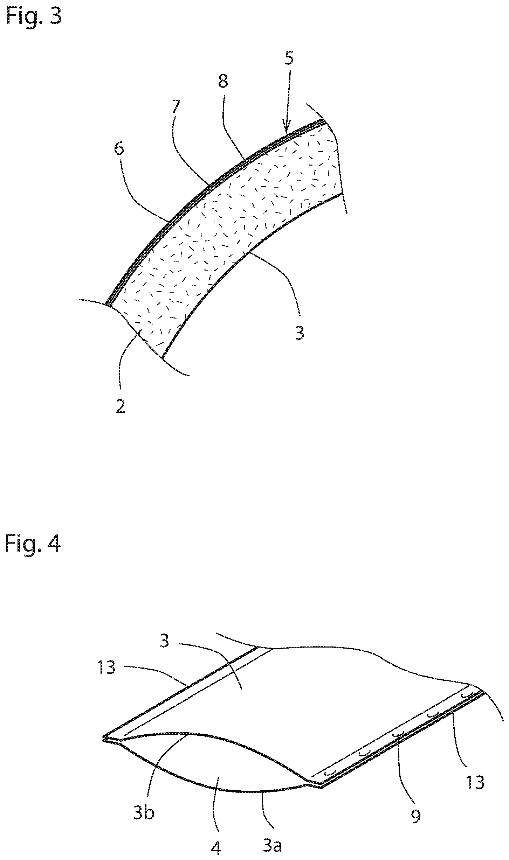

In Fig. 3 a section of an embodiment of an elongated ventilation duct 1 is shown. In this embodiment the duct is built up by an inner layer 3, a fibre layer 2 and an outer layer 5. The outer layer 5 comprises a layer of polyethene 6 closest to the fibre layer 2. The polyethene layer 6 functions as a binder and will stick to the fibre layer 2 by a heating step during production where the polyethene melts and thus bonds the outer layer 5 to the fibre layer 2. Outermost is a layer of aluminium 8 provided. In between a mesh, net or spread glass fibres 7 is provided. The layer of glass fibres 7 increases the strength of the outer layer 5. Preferably, the aluminium 8 is black on its outside, which promote heat dissipation. Generally, the outer layer 5 is arranged to enhance the look of the ventilation duct and to encapsule the fibre, which increases health standards when working with the ducts and the possibility to keep clean.

Under referral to Fig. 4 the production of the inner layer can be described. Preferably, two sheets of stainless-steel foil 3a, 3b are provided one on top of the other. Along long side edges 13 the steel foils are joined by means of welding, such as seam or spot welding 9, or riveting 9. It is also possible to unite by means of folding. If needed it is possible to provide sealing material in the joint between the two steel foils 3a, 3b. This could for example be expandable fire acrylic sealing material.

After uniting the two steel foils 3a, 3b they are raised, for example by means of suction on opposite outer sides of the steel foils 3a, 3b under a movement away from each other, so that a flow space 4 is formed.

The inner layer 3, for example provided according to above, is drawn into a self-supported fibre layer 2, provided with an outer layer 5 or not. Preferably, the two joints between the two steel foils 3a, 3b cut a short distance into the fibre layer 2. When drawn into place the inner layer 3 may be finally shaped into the shape of an inner space of the fibre layer 2, for example by pressing mandrel a having a shape corresponding to the inner space of the fibre layer 2 along the length of the elongated ventilation duct.

Preferably, there is no binding material between the fibre layer 2 and the inner layer 3. In this way the total energy content of the elongated ventilation duct can be kept low. However, an inorganic adhesive is conceivable to fix the inner layer 3 against the inner side of the fibre layer 2.

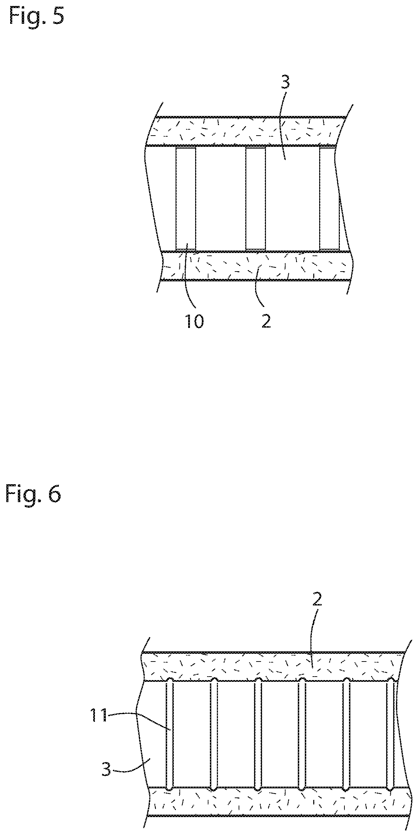

In case of no binding material between the fibre layer 2 and the inner layer 3, it is advantageous to have stiffening means at the inner layer 2 in order to safeguard against the inner layer 3 collapsing during severe under pressure. This could be achieved, for example, according to what is shown Fig. 5, where bands 10 of sheet metal are provided on the inner side, facing the flow space 4, of the inner layer 3 at a distance to each other and more or less transversely to and along the length of the elongated ventilation duct 1.

Another example of how to provide stiffening means is shown in Fig. 6. Here the inner layer 3 itself is provided with stiffening means, in the form of stiffening grooves 11. In the shown embodiment the grooves 11 are more or less transversally oriented but the grooves 11 may be provided in any kind of way giving a stiffening to the inner layer 3.

## Claims

1. An elongated ventilation duct (1) comprising a fibre layer (2) and an inner layer (3) surrounding an elongated flow space (4), **characterised in that**
- the fibre layer (2) comprises mineral fibres and a binder, compressed into a desired duct shape, the mineral fibres having a melting point over 800 degrees Celsius, and
- the inner layer (3) is a stainless-steel foil having a thickness of 0,01-0,3 mm, facing the flow space (4), wherein the inner layer (3) seals the flow space (4) from the mineral fibre layer (2) and the inner layer is made up of two elongated sheets of stainless-steel foil (3a, 3b), which are united along each long side (13) and raised into a corresponding shape as the flow space (4) of the elongated ventilation duct (1) .

2. The ventilation duct according to claim 1, wherein an outer layer (5) is provided on the outside of the fibre layer (2), the outer layer comprises an aluminium foil (8) and a polyethene layer (6) for attachment to the fibre layer.

3. The ventilation duct according to claim 1, wherein the fibre (2) layer is self-supported.

4. The ventilation duct according to claim 1, wherein the mineral fibre length is at least 10 mm, preferably at least 20 mm.

5. The ventilation duct according to claim 1, wherein the binder is phenolic based and water soluble.

6. The ventilation duct according to claim 1, wherein the ventilation duct (1) lacks binding material between the fibre layer (2) and the inner layer (3).

7. The ventilation duct according to claim 2, wherein the outer layer (5) is black.

8. The ventilation duct according to claim 2, wherein the amount of polyethene is between 10-50 g/m², preferably 15-30 g/m².

9. The ventilation duct according to claim 1, wherein the cross-sectional shape is more or less circular.

10. The ventilation duct according to claim 6, wherein stiffening means (10, 11) are present at the inner layer.

11. A method of manufacturing a ventilation duct (1), according to any of claims 1 to 10, having a mineral fibre layer (2), wherein a binder solution is sprayed on the mineral fibre layer (2), whereafter the mineral fibre layer (2) is compressed into a duct shape, having an elongated flow space (4), under heated conditions so that water in the binder solution evaporates, and bringing an inner layer (3) into the flow space of the duct, which inner layer (3) seals the flow space (4) of the duct from the mineral fibre layer (2), **characterised by** the inner layer (3) is made of stainless-steel foil, and the inner layer (3) is made up of two elongated sheets of stainless-steel foil (3a, 3b), which are united along each long side (13) and raised into a corresponding shape as the flow space (4) of the elongated ventilation duct (1).

12. The method according to claim 11, wherein an outer layer (5), comprising an aluminium foil (8) and a polyethene layer (6), is provided on the outside of the mineral fibre layer (2) and heated so that the polyethene foil (6) melts and thus bonds the outer layer to the mineral fibre layer (2).

13. The method according to claim 11, wherein the inner layer (3) has a thickness of 0,01-0,3 mm.

14. The method according to claim 13, wherein the stainless-steel foils (3a, 3b) are united by means welding, riveting or folding.

15. The method according to claim 11, wherein the inner layer (3) is drawn more or less linearly along a thought length axis (14) into the flow space (4) of the elongated ventilation duct (1).

16. The method according to claim 11, wherein stiffening means (10, 11) are provided at the inner layer (3).

## Patentansprüche

1. Länglicher Lüftungskanal (1) umfassend eine Faserschicht (2) und eine Innenschicht (3), die einen länglichen Strömungsraum (4) umgeben, **dadurch gekennzeichnet, dass**
- die Faserschicht (2) Mineralfasern und ein Bindemittel enthält, die zu einer gewünschten Kanalform verdichtet sind, wobei die Mineralfasern einen Schmelzpunkt über 800 Grad Celsius haben, und
- die Innenschicht (3) eine Edelstahlfolie mit einer Dicke von 0,01-0,3 mm ist, die dem Strömungsraum (4) zugewandt ist, wobei die Innenschicht (3) den Strömungsraum (4) gegenüber der Mineralfaserschicht (2) abdichtet und die Innenschicht aus zwei länglichen Blättern aus Edelstahlfolie (3a, 3b) aufgebaut ist, die entlang jeder Längsseite (13) verbunden und in eine entsprechende Form wie der Strömungsraum (4) des länglichen Lüftungskanals (1) angehoben sind.

2. Lüftungskanal nach Anspruch 1, wobei auf der Außenseite der Faserschicht (2) eine Außenschicht (5) vorgesehen ist, die eine Aluminiumfolie (8) und eine Polyethylenschicht (6) zur Befestigung an der Faserschicht umfasst.

3. Lüftungskanal nach Anspruch 1, wobei die Faserschicht (2) selbsttragend ist.

4. Lüftungskanal nach Anspruch 1, wobei die Mineralfaserlänge mindestens 10 mm, vorzugsweise mindestens 20 mm beträgt.

5. Lüftungskanal nach Anspruch 1, wobei das Bindemittel phenolbasiert und wasserlöslich ist.

6. Lüftungskanal nach Anspruch 1, wobei der Lüftungskanal (1) kein Bindematerial zwischen der Faserschicht (2) und der Innenschicht (3) aufweist.

7. Lüftungskanal nach Anspruch 2, wobei die Außenschicht (5) schwarz ist.

8. Lüftungskanal nach Anspruch 2, wobei die Menge an Polyethylen zwischen 10-50 g/m², vorzugsweise 15-30 g/m², liegt.

9. Lüftungskanal nach Anspruch 1, wobei die Querschnittsform mehr oder weniger kreisförmig ist.

10. Lüftungskanal nach Anspruch 6, wobei Versteifungsmittel (10, 11) an der Innenschicht vorhanden sind.

11. Verfahren zur Herstellung eines Lüftungskanals (1) nach einem der Ansprüche 1 bis 10 mit einer Mineralfaserschicht (2), wobei eine Bindemittellösung auf die Mineralfaserschicht (2) aufgesprüht wird, woraufhin die Mineralfaserschicht (2) unter erwärmten Bedingungen in eine Kanalform mit länglichem Strömungsraum (4) gepresst wird, sodass Wasser in der Bindemittellösung verdampft, und eine Innenschicht (3) in den Strömungsraum des Kanals eingebracht wird, wobei die Innenschicht (3) den Strömungsraum (4) des Kanals gegenüber der Mineralfaserschicht (2) abdichtet, **dadurch gekennzeichnet, dass** die Innenschicht (3) aus Edelstahlfolie hergestellt ist und die Innenschicht (3) aus zwei länglichen Blättern aus Edelstahlfolie (3a, 3b) aufgebaut ist, die entlang jeder Längsseite (13) verbunden und in eine entsprechende Form wie der Strömungsraum (4) des länglichen Lüftungskanals (1) angehoben sind.

12. Verfahren nach Anspruch 11, bei dem eine Außenschicht (5), umfassend eine Aluminiumfolie (8) und eine Polyethylenschicht (6), auf der Außenseite der Mineralfaserschicht (2) angebracht und erhitzt wird, sodass die Polyethylenfolie (6) schmilzt und so die Außenschicht mit der Mineralfaserschicht (2) verbindet.

13. Verfahren nach Anspruch 11, wobei die Innenschicht (3) eine Dicke von 0,01-0,3 mm aufweist.

14. Verfahren nach Anspruch 13, wobei die Edelstahlfolien (3a, 3b) durch Schweißen, Nieten oder Falten miteinander verbunden werden.

15. Verfahren nach Anspruch 11, wobei die Innenschicht (3) mehr oder weniger linear entlang einer gedachten Längsachse (14) in den Strömungsraum (4) des länglichen Lüftungskanals (1) gezogen wird.

16. Verfahren nach Anspruch 11, wobei an der Innenschicht (3) Versteifungsmittel (10, 11) vorgesehen sind.

## Revendications

1. Conduit de ventilation allongé (1) comprenant une couche de fibres (2) et une couche intérieure (3) entourant un espace d'écoulement allongé (4), **caractérisé en ce que**
- la couche de fibres (2) comprend des fibres minérales et un liant, compressés sous une forme de conduit souhaitée, les fibres minérales ayant un point de fusion supérieur à 800 degrés Celsius, et
- la couche intérieure (3) est une feuille d'acier inoxydable ayant une épaisseur de 0,01 à 0,3 mm, faisant face à l'espace d'écoulement (4), laquelle couche intérieure (3) scelle l'espace d'écoulement (4) vis-à-vis de la couche de fibres minérales (2) et laquelle couche intérieure est constituée de deux tôles allongées de feuille d'acier inoxydable (3a, 3b), qui sont unifiées le long de chaque côté long (13) et érigées sous une forme correspondante en tant qu'espace d'écoulement (4) du conduit de ventilation allongé (1).

2. Conduit de ventilation selon la revendication 1, dans lequel une couche extérieure (5) est disposée sur l'extérieur de la couche de fibres (2), et la couche extérieure comprend une feuille d'aluminium (8) et une couche de polyéthène (6) pour un rattachement à la couche de fibres.

3. Conduit de ventilation selon la revendication 1, dans lequel la couche de fibres (2) est autosupportée.

4. Conduit de ventilation selon la revendication 1, dans lequel la longueur des fibres minérales est d'au moins 10 mm, de préférence d'au moins 20 mm.

5. Conduit de ventilation selon la revendication 1, dans lequel le liant est phénolique et soluble dans l'eau.

6. Conduit de ventilation selon la revendication 1, lequel conduit de ventilation (1) est dépourvu de matériau liant entre la couche de fibres (2) et la couche intérieure (3).

7. Conduit de ventilation selon la revendication 2, dans lequel la couche extérieure (5) est noire.

8. Conduit de ventilation selon la revendication 2, dans lequel la quantité de polyéthène est comprise entre 10 et 50 g/m², de préférence entre 15 et 30 g/m².

9. Conduit de ventilation selon la revendication 1, dans lequel la forme en coupe transversale est plus ou moins circulaire.

10. Conduit de ventilation selon la revendication 6, dans lequel des moyens de rigidification (10, 11) sont présents au niveau de la couche intérieure.

11. Procédé de fabrication d'un conduit de ventilation (1) selon l'une quelconque des revendications 1 à 10, ayant une couche de fibres minérales (2),
dans lequel une solution de liant est pulvérisée sur la couche de fibres minérales (2), après quoi la couche de fibres minérales (2) est compressée sous une forme de conduit, ayant un espace d'écoulement allongé (4), dans des conditions chauffées de façon que l'eau dans la solution de liant s'évapore, et une couche intérieure (3) est placée dans l'espace d'écoulement du conduit, laquelle couche intérieure (3) scelle l'espace d'écoulement (4) du conduit vis-à-vis de la couche de fibres minérales (2), **caractérisé en ce que** la couche intérieure (3) est faite d'une feuille d'acier inoxydable, et la couche intérieure (3) est constituée de deux tôles allongées de feuille d'acier inoxydable (3a, 3b), qui sont unifiées le long de chaque côté long (13) et érigées sous une forme correspondante en tant qu'espace d'écoulement (4) du conduit de ventilation allongé (1).

12. Procédé selon la revendication 11, dans lequel une couche extérieure (5), comprenant une feuille d'aluminium (8) et une couche de polyéthène (6), est disposée sur l'extérieur de la couche de fibres minérales (2) et chauffée de façon que la feuille de polyéthène (6) fonde et ainsi colle la couche extérieure à la couche de fibres minérales (2).

13. Procédé selon la revendication 11, dans lequel la couche intérieure (3) a une épaisseur de 0,01 à 0,3 mm.

14. Procédé selon la revendication 13, dans lequel les feuilles d'acier inoxydable (3a, 3b) sont unifiées au moyen d'un soudage, d'un rivetage ou d'un pliage.

15. Procédé selon la revendication 11, dans lequel la couche intérieure (3) est étirée plus ou moins linéairement le long d'un axe de longueur supposé (14) dans l'espace d'écoulement (4) du conduit de ventilation allongé (1).

16. Procédé selon la revendication 11, dans lequel des moyens de rigidification (10, 11) sont disposés au niveau de la couche intérieure (3).
